# EUROPEAN PATENT APPLICATION

(11) **EP 4 509 798 A1**
(43) Date of publication of application: **19.02.2025**
(21) Application number: 23935895.5
(22) Date of filing: 19.10.2023
(51) Int. Cl.: G01C 21/36

(54) **INFORMATION DISPLAY METHOD AND DEVICE, STORAGE MEDIUM AND PROGRAM PRODUCT**

(30) Priority: 19.05.2023 CN 202310574248
(71) Applicant: Ecarx (Hubei) Tech Co., Ltd., Wuhan, Hubei 430056 (CN)
(72) Inventor: ZHANG, Junxiang, Wuhan Hubei 430056 (CN); ZHU, Ying, Wuhan Hubei 430056 (CN); LU, Jie, Wuhan Hubei 430056 (CN); KUANG, Jia, Wuhan Hubei 430056 (CN); LIU, Yadong, Wuhan Hubei 430056 (CN)
(74) Representative: Ipside
(86) International application number: PCT/CN2023/125353
(87) International publication number: WO 2024/239521

(57) **Abstract**

An information display method, a device, a storage medium, and a program product are provided. The method includes: acquiring (201) positioning information and environmental perception information in response to a navigation request, and determining a three-dimensional scene graph according to the positioning information and the environmental perception information; determining (202) a current driving scenario, and generating prompt information according to the driving scenario; generating (203) a three-dimensional guidance map according to the prompt information and the three-dimensional scene graph, and displaying the three-dimensional guidance map.

## Description

The present application claims priority to Chinese Patent Application No. 202310574248.8, filed with the China National Intellectual Property Administration on May 19, 2023, which is hereby incorporated by reference in its entirety.

### TECHNICAL FIELD

Embodiments of the present application relate to the field of navigation technology, for example, to an information display method, a device, a storage medium and a program product.

### BACKGROUND

Assisted driving refers to that during a driver driving a vehicle, the vehicle provides auxiliary support through devices such as radar and camera, making it easier and safer for the driver to drive the vehicle on the road and arrive at the destination safely. Assisted driving includes: a lane keeping assist system, an automatic parking assist system, braking assist, a reversing assist system and a driving assist system.

In related technologies, assisted driving systems usually use two-dimensional static information such as static icons and turn-by-turn navigation (Turn By Turn, TBT) cards to prompt users about planned routes.

However, the information provided to the user in the above manner is less informative and less accurate, and is not intuitive enough.

### SUMMARY

Embodiments of the present application provide an information display method, a device, a storage medium and a program product to improve the comprehensiveness, accuracy and intuitiveness of assisted driving information, so as to enhance the driving experience and increase driving pleasure.

In a first aspect, an embodiment of the present application provides an information display method, including:
acquiring positioning information and environmental perception information in response to a navigation request, and determining a three-dimensional scene graph according to the positioning information and the environmental perception information;
determining a current driving scenario, and generating prompt information according to the driving scenario;
generating a three-dimensional guidance map according to the prompt information and the three-dimensional scene graph, and displaying the three-dimensional guidance map.

In a second aspect, an embodiment of the present application provides an information display device, including:
a determination module, which is configured to obtain positioning information and environmental perception information in response to a navigation request, and determine a three-dimensional scene graph according to the positioning information and the environmental perception information;
a generation module, which is configured to determine a current driving scenario and generate prompt information according to the driving scenario;
a display module, which is configured to generate a three-dimensional guidance map according to the prompt information and the three-dimensional scene graph, and display the three-dimensional guidance map.

In a third aspect, an embodiment of the present application provides an information display device, including: at least one processor and a memory;
the memory stores computer-executable instructions;
the at least one processor executes the computer-executable instructions stored in the memory, so that the at least one processor performs the method described above.

In a fourth aspect, an embodiment of the present application provides a computer-readable storage medium, in which the computer-executable instructions are stored. When a processor executes the computer-executable instructions, the method as described above is implemented.

In a fifth aspect, an embodiment of the present application provides a computer program product, including a computer program. When the computer program is executed by a processor, the method described above is implemented.

### BRIEF DESCRIPTION OF DRAWINGS

In order to more clearly illustrate the technical solutions in the embodiments of the present application or related technologies, the following is a brief introduction to the drawings required for the description of the embodiments or related technologies.
FIG. 1 is a schematic diagram of an application scenario of an information display method provided by an embodiment of the present application.
FIG. 2 is a schematic flow diagram of an information display method provided by an embodiment of the present application.
FIG. 3 is a schematic diagram of a display interface in a straight driving scenario provided by an embodiment of the present application.
FIG. 4 is a schematic diagram of a display interface in a turning at road junction scenario provided by an embodiment of the present application.
FIG. 5 is a schematic diagram of a display interface in a lane changing scenario provided by an embodiment of the present application.
FIG. 6 is a first schematic diagram of a display interface in a traffic light scenario provided by an embodiment of the present application.
FIG. 7 is a second schematic diagram of a display interface in a traffic light scenario provided by an embodiment of the present application.
FIG. 8 is a first schematic diagram of a display interface in an excessive proximity driving scenario provided by an embodiment of the present application.
FIG. 9 is a second schematic diagram of a display interface in an excessive proximity driving scenario provided by an embodiment of the present application.
FIG. 10 is a third schematic diagram of a display interface in an excessive proximity driving scenario provided by an embodiment of the present application;
FIG. 11 is a schematic diagram of a display interface in an overspeed scenario provided by an embodiment of the present application.
FIG. 12 is a schematic diagram of a display interface for POI recommendation provided in an embodiment of the present application.
FIG. 13 is a first structural diagram of an information display device provided in an embodiment of the present application.
FIG. 14 is a schematic diagram of a hardware structure of an information display device provided in an embodiment of the present application.

### DESCRIPTION OF EMBODIMENTS

The technical solutions in the embodiments of the present application will be clearly and comprehensively described below in conjunction with the drawings in the embodiments of the present application.

User information (including but not limited to user device information, user personal information, etc.) and data (including but not limited to data used for analysis, stored data, displayed data, etc.) involved in this application are all authorized by the user or have been fully authorized by multiple parties, and the collection, use and processing of relevant data must comply with relevant laws, regulations and standards, and provide corresponding operation interfaces for users to choose to authorize or refuse.

The information display method and device provided in the present application can be used in the field of navigation technology, and can also be used in any field other than the field of navigation technology. The application field of the information display method and device provided in the present application is not limited.

With the development of vehicle intelligence, intelligent assisted driving scenarios will reflect more functionality and visual presentation content. In related technologies, when the driver is driving, the assisted driving system usually prompts the user about the planned route only with static icons, turn-by-turn navigation (Turn By Turn, TBT) cards, etc. Static icon cards carry too little information and cannot objectively express the current driving status of the vehicle, road conditions, and the relationship between the current vehicle and the real physical space. In this scenario, a more accurate visual presentation of the driving process is particularly important to improve driving safety, driving experience and increase driving pleasure.

An embodiment of the present application provides an information display method, in which a three-dimensional scene graph can be generated by sensing multiple elements in the surrounding environment, and different prompt information is generated for different scenarios, so that the three-dimensional scene graph and the prompt information can be integrated and displayed to obtain more accurate, comprehensive and intuitive driving assistance information.

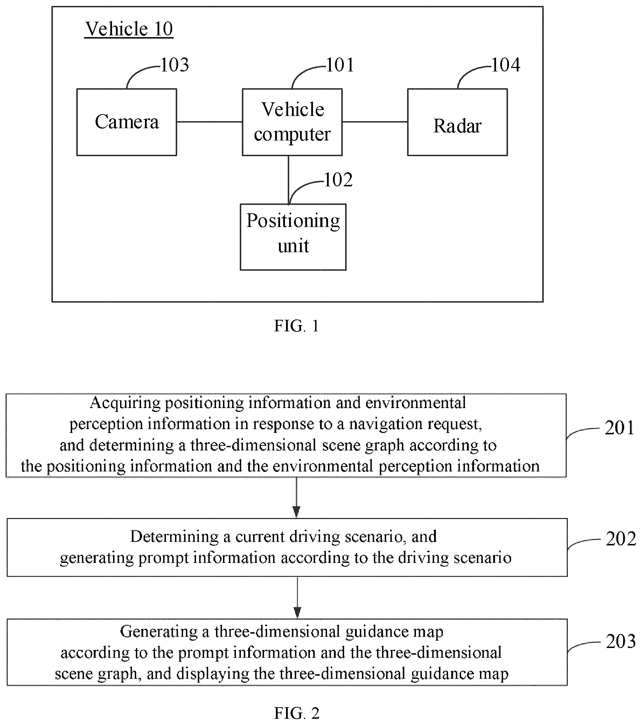

FIG. 1 is a schematic diagram of an application scenario of an information display method provided by an embodiment of the present application. As shown in FIG. 1, a vehicle is equipped with a high-precision positioning unit, a camera, a radar, and a vehicle computer. The high-precision positioning unit is configured to obtain the positioning information of the vehicle, the camera and radar are configured to obtain environmental perception information, and the vehicle computer is configured to generate a three-dimensional guidance map according to the positioning information and the environmental perception information and display the three-dimensional guidance map through a display screen. Optionally, the radar may be a millimeter-wave radar, an ultrasonic radar, or a lidar; the camera may include a forward-facing camera and a surround-view camera.

During the specific implementation process, the camera can obtain and record the relevant feature information and location information of pedestrians, vehicles, zebra crossings, buildings, obstacles, etc. on the road. The surveying and mapping accuracy of millimeter-wave radar can reach the millimeter level, and the perception information of the surrounding environment can be refreshed within every 5 milliseconds, and the farthest surveying and mapping range can exceed 200 meters. A combination of the camera and millimeter-wave radar is used to obtain specific environmental information about the surrounding environment, including pedestrians, trees, vehicles, zebra crossings, road shoulders, road curbs, elevated roads, surrounding buildings and other elements that appear in various driving environment. In the embodiments of the present application, an information display method, a device, a storage medium and a program product are provided. The method includes: obtaining, by a vehicle computer, positioning information and environmental perception information in response to a navigation request, and determining a three-dimensional scene graph according to the positioning information and the environmental perception information; determining a current driving scenario, and generating prompt information according to the driving scenario; generating a three-dimensional guidance map according to the prompt information and the three-dimensional scene graph, and displaying the three-dimensional guidance map. Users can control the driving of the vehicle according to the three-dimensional guidance map. In the information display method provided in the embodiment of the present application, a three-dimensional scene graph is generated by sensing the surrounding environment and then combined with prompt information for different scenarios, so as to provide users with more accurate, rich and intuitive auxiliary driving information, thereby improving driving safety, enhancing driving experience and increasing driving pleasure.

The scenario diagram shown in FIG. 1 is only an example. The information display method and scenario described in the embodiment of the present application are intended to more clearly illustrate the technical solution of the embodiment of the present application, and do not constitute a limitation on the technical solution provided by the embodiment of the present application. With the evolution of the system and the emergence of new business scenarios, the technical solution provided by the embodiment of the present application is also applicable to similar technical problems.

The technical solution of the present application is described in detail below with reference to embodiments. The following embodiments may be combined with each other, and the same or similar concepts or processes in some embodiments will not be described in detail.

FIG. 2 is a schematic flow diagram of an information display method provided by an embodiment of the present application. As shown in FIG. 2, the method includes the following steps.

201, acquiring positioning information and environmental perception information in response to a navigation request, and determining a three-dimensional scene graph according to the positioning information and the environmental perception information.

The execution body of this embodiment may be a vehicle or a vehicle computer of the vehicle.

In this embodiment, the navigation request may be an instruction to start a navigation application, or may be a navigation instruction after a destination is input, which is not limited in this embodiment. For example, when the vehicle computer opens the navigation application, a three-dimensional scene graph can be determined according to the positioning information obtained by a positioning unit and the environmental perception information obtained by a sensor such as a camera and a radar, and the three-dimensional scene graph can be displayed in real-time through a vehicle monitor.

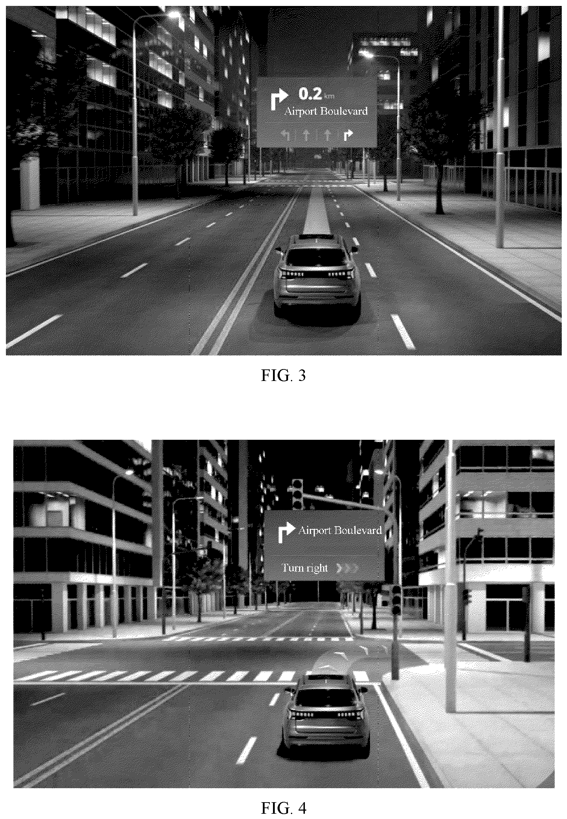

In some embodiments, in order to better fit the user's observation perspective, the observation perspective of the three-dimensional scene graph can be a top-down perspective and a front-view perspective at a preset angle seen from above the back of the vehicle along the driving direction. As shown in FIG. 3, the entire vehicle and a preset distance behind the vehicle can be presented in the three-dimensional scene graph, and the vehicle can also be displayed in the center of the three-dimensional scene graph.

In some embodiments, the obtaining the positioning information and the environmental perception information may include: obtaining the positioning information through the positioning unit, and obtaining the environmental perception information through the camera and the millimeter wave radar.

The positioning information may be obtained through the positioning fusion solution of the Global Navigation Satellite System (Global Navigation Satellite System, GNSS) and (Inertial Measurement Unit, IMU). In the process of obtaining the environmental perception information, the positioning of the self-vehicle can be used as a reference to obtain and record the relevant feature information and location information of pedestrians, vehicles, zebra crossings, buildings, obstacles, etc. on the road through the camera. The surveying and mapping accuracy of the millimeter-wave radar can reach the millimeter level, and the perception information of the surrounding environment will refreshed within every 5 milliseconds, with the farthest surveying and mapping range exceeding 200 meters. By fusing image information obtained by the camera and radar data obtained by the millimeter-wave radar, specific environmental perception information of the surrounding environment can be obtained, including pedestrians, trees, vehicles, zebra crossings, road shoulders, road curbs, elevated roads, surrounding buildings and other elements (objects) that appear in various driving environment. According to the environmental perception information, artistic processing can be added through the computer to draw an aesthetically pleasing real-life three-dimensional (3-dimension, 3D) map that is highly compatible with reality.

In some embodiments, the determining the three-dimensional scene graph according to the positioning information and the environmental perception information may include: inputting the environmental perception information into a deep learning model to obtain an initial model of a plurality of elements corresponding to the environmental perception information; determining corresponding target vector data from a high-precision vector database according to the positioning information and the initial model, where the high-precision vector database includes vector data corresponding to different positioning information collected in advance; generating a triangular mesh of the initial model according to the vector data, and procedurally generating a three-dimensional scene graph corresponding to the environmental perception information according to the triangular mesh.

After the environmental perception information is obtained, the environmental perception information can be input into the pre-trained neural network deep learning model, and models in a corresponding model library can be matched to the specific objects corresponding to the monitored environmental perception information for drawing. Then, a game engine can generate a triangular mesh containing surrounding buildings, lanes, green belts and other elements according to desensitized vector data provided by a map provider, and procedurally generate fine details such as protrusions on the building surface, lanes, roads, and elevated roads, ultimately presenting the three-dimensional scene graph.

In some embodiments, in order to improve the realism of the three-dimensional scene graph, fine models of immovable elements such as buildings involved in the map can be collected in advance for subsequent replacement to obtain a more realistic three-dimensional scene graph. The procedurally generating the three-dimensional scene graph corresponding to the environmental perception information according to the triangular mesh may include: procedurally generating an initial scene graph corresponding to the environmental perception information according to the triangular mesh; in a case where there is a target element with a high-precision model among the plurality of elements corresponding to the environmental perception information, replacing a model of the target element in the initial scene graph with the corresponding high-precision model, so as to obtain the three-dimensional scene graph corresponding to the environmental perception information.

After the procedurally generated preliminary three-dimensional scene graph is obtained, the corresponding rough models in the preliminary three-dimensional scene graph can be replaced with fine models of some landmark buildings to present a more realistic real-life mapping and obtain the final three-dimensional scene graph.

202, determining a current driving scenario, and generating prompt information according to the driving scenario.

203, generating a three-dimensional guidance map according to the prompt information and the three-dimensional scene graph, and displaying the three-dimensional guidance map.

After a user inputs a destination through the navigation application and the navigation application generates a navigation route according to the destination, the vehicle is started. The vehicle will pass through different driving scenarios during the driving process, such as straight driving scenarios, turning scenarios, traffic light scenarios, lane changing scenarios, overspeed scenarios, excessive proximity driving scenarios (i.e., being too close to obstacles), reversing scenarios, parking scenarios, etc. Different prompt information may be generated for different scenes, and then the prompt information and the three-dimensional scene graph may be fused to obtain a three-dimensional guidance map, and the three-dimensional guidance map may be displayed on the display screen.

In some embodiments, after different driving scenarios are determined, different scenarios may also be divided in terms of safety levels. Safety incidents can be divided into three categories: low-risk, medium-risk, and high-risk, and different assisted driving display and driving guidance strategies are implemented respectively. Identifiers can be assigned to low-risk levels and medium-risk levels. In low-risk scenarios, the display interface shows a low-risk identifier, and in medium-risk scenarios, the display interface shows a medium-risk identifier, so that users can know the current level of danger and enhance their alertness. Navigation can be paused for high-risk scenarios, such as when the vehicle is involved in a dangerous incident such as a collision, or when the vehicle computer system fails or freezes.

In some embodiments, a straight driving scenario is involved. When an own vehicle (self-vehicle) is driving straight along the current direction without road junction or lane changing instructions, etc., the generating the prompt information according to the driving scenario may include: in a case where the current driving scenario is a straight driving scenario, a guide line can be generated according to the positioning information of the vehicle, where the guide line can start from the front end of the vehicle and extend forward with a preset length (for example, 100 meters) along the driving direction. Optionally, the guide line may be a gradient strip line segment that gradually fades as the distance from the vehicle increases. By adopting a color gradient display style, the guide line can adapt to the actual observation habits of the human eye, be more intuitive and realistic, and enhance the user experience.

As shown in FIG. 3, lane guidance is always maintained for the self-vehicle during driving, and the display style can be a strip-shaped color block that is projected forward on the lane from the bottom of the vehicle, and extends to 100 meters in front of the vehicle and gradually disappears.

In some embodiments, the generating the prompt information according to the driving scenario may include: in a case where the current driving scenario is a turning at road junction scenario or a lane changing scenario, obtaining a turning direction, and generating a direction change guide line of a preset length that fits the ground according to the turning direction; the direction change guide line includes multiple continuous arrows with gradually changing directions.

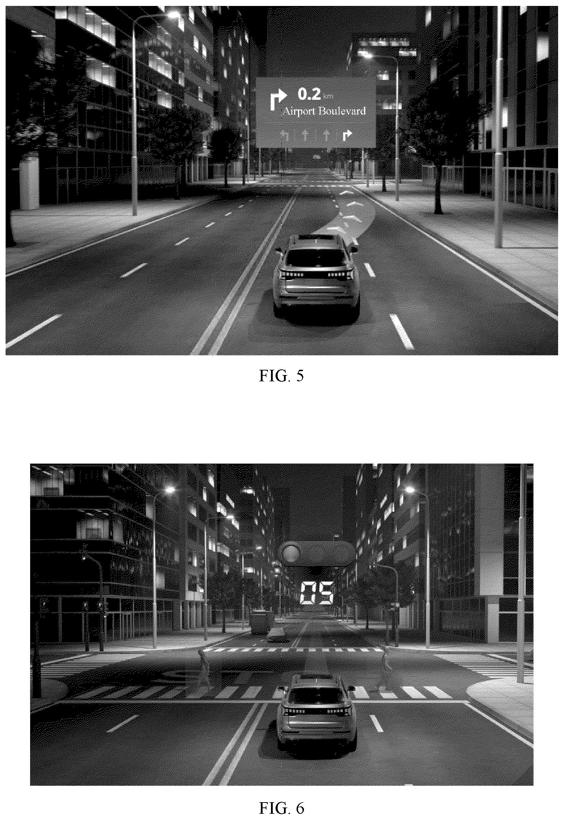

As shown in FIG. 3, lane guidance is always maintained for the self-vehicle during driving. The display style can be a strip-shaped color block that is projected forward on the lane from the bottom of the vehicle, and extends to 100 meters in front of the vehicle and gradually disappears. As shown in FIG. 4, when the vehicle enters the turning at road junction scenario, continuous arrows can be superimposed on the gradient guidance strip above the lane to guide the driver's driving direction. As shown in FIG. 5, when the vehicle enters a lane changing scenario, continuous arrows can be superimposed on the guidance strip to indicate the lane changing direction.

In some embodiments, the generating the prompt information according to the driving scenario may include: in a case where the current driving scenario is a traffic light scenario and the vehicle drives to a point where a distance to the traffic light is less than or equal to a preset distance, generating a three-dimensional model of the traffic light; in a case where the current driving scenario is that a red light is on, obtaining and displaying countdown timing information, and setting transparency of the driving guide line to first transparency; in a case where an end of the countdown is detected, setting the transparency of the driving guide line to second transparency; the first transparency is higher than the second transparency.

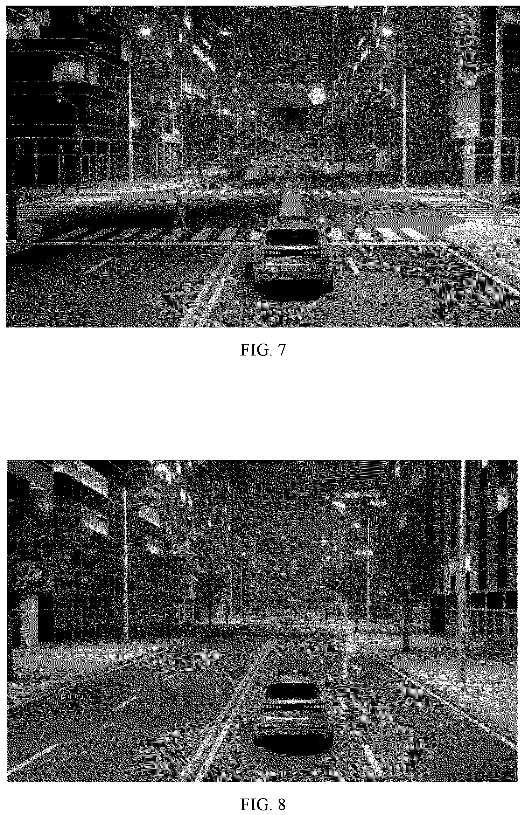

As shown in FIG. 6, when the vehicle drives to a point which is away from the road junction with a preset distance (for example, 40m), a 3D traffic light prompt will appear in the area vertically above the horizontal center. If there is countdown timing information, such information will be displayed synchronously below the traffic light. In order to alert the user to the parking location, the word "STOP" (parking station) may be displayed on the ground at the highlighted road junction of the crosswalk line, and the opacity of the lane auxiliary guide line can be reduced. As shown in FIG. 7, after the red light ends, the countdown is completed, the red light goes out and the green light comes on, the word "STOP" on the ground at the road junction disappears, and the lane auxiliary guide line is highlighted to indicate the forward route. The above settings of the position, color, and size of elements such as traffic lights and countdown devices can be adjusted according to actual needs, and this embodiment does not limit this.

In some embodiments, the determining the current driving scenario may include: performing distance detection on movable elements around the self-vehicle according to the positioning information and the environmental perception information to obtain distance information corresponding to each movable element; in a case where there is a target movable element whose distance information is less than a preset distance among the plurality of movable elements, determining that the current driving scenario is an excessive proximity driving scenario; accordingly, the generating the prompt information according to the driving scenario may include: in a case where the current driving scenario is the excessive proximity driving scenario, generating a synchronously moving three-dimensional warning color block according to a moving position of the target movable element.

As shown in FIG. 8, according to the positioning information and the environmental perception information, the distance of movable elements such as vehicles and pedestrians around the self-vehicle can be detected. For people, video clips of human activities can be captured and then reproduced through three-dimensional computer simulation. When the distance to a pedestrian is less than a preset distance, a red gradient translucent cube warning effect can be presented around the pedestrian and move with the pedestrian. According to this, the danger zone can be presented to the user more intuitively.

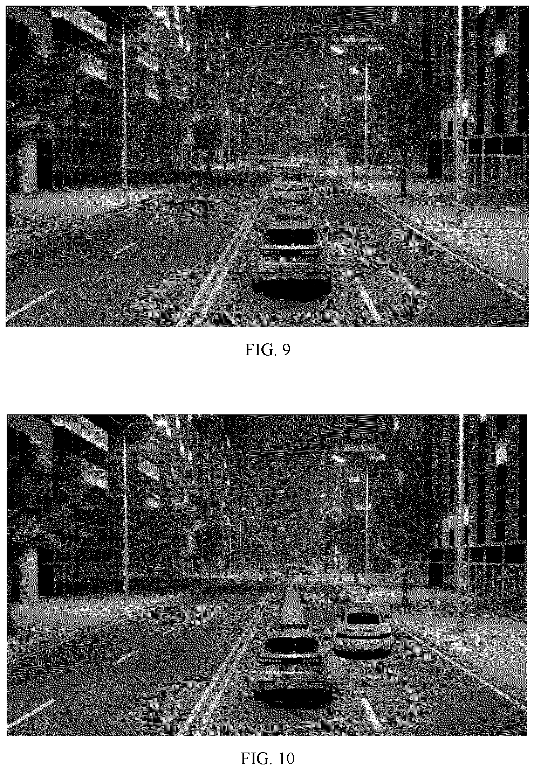

For the scenarios where the vehicle in front or on the side is too close, as shown in FIG. 9 and FIG. 10, during the driving process, the surrounding environment is sensed and data is collected to perform static and dynamic object recognition, detection and tracking, and the map data is combined for calculation and analysis to make danger predictions. According to the laser radar installed on the vehicle, the laser can be emitted outward. After encountering an object, the laser is refracted back and received by the metal oxide semiconductor (Complementary Metal Oxide Semiconductor, CMOS) sensor, thereby measuring the distance from the self-vehicle to the obstacle. When surrounding vehicles are too close to the self-vehicle (when the distance between the self-vehicle and surrounding vehicles is less than the preset distance) and there is a risk of collision, the vehicle body will turn red for warning, and a red alarm area (fan-shaped area) will appear in the close area of the circular area at the bottom of the self-vehicle. A triangular exclamation mark warning identifier with a flashing animation may be displayed above the close vehicles.

In this embodiment, the setting of the color and shape of the display style can be adjusted according to actual needs, and this embodiment does not limit this.

In some embodiments, the determining the current driving scenario may include: obtaining a current driving speed and a speed limit of a current road section; in a case where the current driving speed exceeds the speed limit, determining that the current driving scenario is an overspeed scenario; accordingly, the generating the prompt information according to the driving scenario may include: in a case where the current driving scenario is the overspeed scenario, generating a graphic card and a flashing warning color block of the current driving speed and the speed limit.

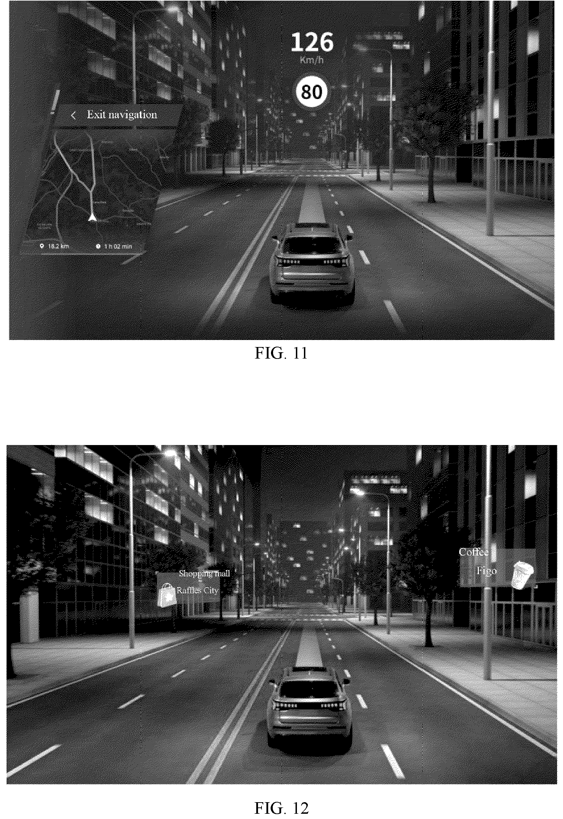

As shown in FIG. 11, according to the road information recorded in the navigation system (including speed limit information of multiple road sections), when the self-vehicle speed exceeds the speed limit of the current road section, the speed limit numerical identifier of the road section can be displayed in the upper vertical area of the horizontal center, and a red gradient flashing warning will appear on both sides of the screen, disappearing horizontally from both sides to the center. In this embodiment, the setting of the color and shape of the display style can be adjusted according to actual needs, and this embodiment does not limit this.

In the information display method provided in the embodiment, a three-dimensional scene graph is generated by sensing the surrounding environment and combined with prompt information for different scenarios, so as to provide users with more accurate, rich and intuitive auxiliary driving information, thereby improving driving safety, enhancing driving experience and increasing driving pleasure.

In some embodiments, in order to facilitate users to quickly learn about the uses of surrounding places, points of interest (Point of Interest, POI) may be recommended to users. According to the above embodiment, after step 203, step 204 may also be included: determining a search range according to the positioning information; obtaining operation data, and determining a plurality of points of interest within the search range according to the operation data; determining positions of the plurality of points of interest in the three-dimensional guidance map, and displaying identifiers of the corresponding points of interest at the multiple positions.

A POI annotation exploration method according to a 3D map is used to obtain a navigation route request of the self-vehicle. According to the navigation route and operation data, a search range circle may be drawn around the navigation route with the self-vehicle positioning as the center and a preset length (for example, 3km) as the radius. Within the range circle, positions of multiple POIs are obtained in combination with user preferences and operation data, and are presented on the map interface in the form of a see-through card sticker in combination with 3D buildings. No more than 4 point positions are displayed at the same time. The POI point corresponds to a target resource, and the target resource has a unique identifier.

As shown in FIG. 12, the display position of the POI identifier can be set on the surface of the buildings on both sides of the road, and presented through a see-through card (with the center of the road being seen through the card), showing the name, type and 3D icon of the POI point.

The method provided in this embodiment, by displaying the identifiers of multiple POI points of interest in the three-dimensional guidance map, enables users to find places of interest more quickly and learn about the functional uses of surrounding places, thereby improving the user's driving experience.

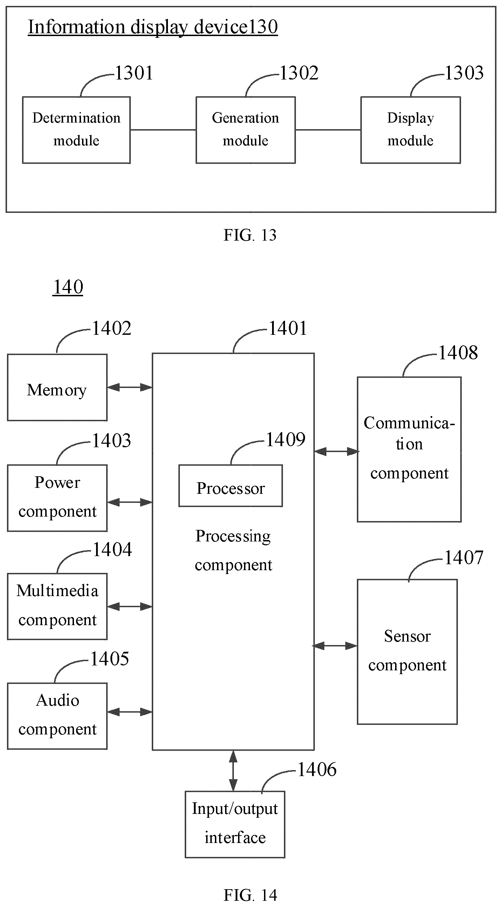

FIG. 13 is a structural diagram of an information display device provided in an embodiment of the present application. As shown in FIG. 13, the information display device 130 includes: a determination module 1301, a generation module 1302 and a display module 1303.

The determination module 1301 is configured to obtain positioning information and environmental perception information in response to a navigation request, and determine a three-dimensional scene graph according to the positioning information and the environmental perception information;
the generation module 1302 is configured to determine a current driving scenario and generate prompt information according to the driving scenario;
the display module 1303 is configured to generate a three-dimensional guidance map according to the prompt information and the three-dimensional scene graph, and display the three-dimensional guidance map.

In the information display device provided in the embodiment of the present application, a three-dimensional scene graph is generated by sensing the surrounding environment, and is combined with prompt information for different scenarios, so as to provide users with more accurate, rich and intuitive auxiliary driving information, thereby improving driving safety, enhancing driving experience and increasing driving pleasure.

In some embodiments, the determination module 1301 is configured to:
input the environmental perception information into a deep learning model to obtain an initial model of a plurality of elements corresponding to the environmental perception information;
determine corresponding target vector data from a high-precision vector database according to the positioning information and the initial model, where the high-precision vector database includes vector data corresponding to different positioning information collected in advance;
generate a triangular mesh of the initial model according to the vector data, and procedurally generate a three-dimensional scene graph corresponding to the environmental perception information according to the triangular mesh.

In some embodiments, the determination module 1301 is configured to:
procedurally generate an initial scene graph corresponding to the environmental perception information according to the triangular mesh;
in a case where there is a target element with a high-precision model among the plurality of elements corresponding to the environmental perception information, replace a model of the target element in the initial scene graph with the corresponding high-precision model, so as to obtain the three-dimensional scene graph corresponding to the environmental perception information.

In some embodiments, the generation module 1302 is configured to:
in a case where the current driving scenario is a turning at road junction scenario or a lane changing scenario, obtain a turning direction, and generate a direction change guide line of a preset length that fits a ground according to the turning direction; the direction change guide line includes multiple continuous arrows with gradually changing directions.

In some embodiments, the generation module 1302 is configured to:
in a case where the current driving scenario is a traffic light scenario and a vehicle drives to a point where a distance to a traffic light is less than or equal to a preset distance, generate a three-dimensional model of the traffic light; in a case where the current driving scenario is that a red light is on, obtain and display countdown timing information, and set transparency of a driving guide line to first transparency; in a case where an end of a countdown is detected, setting the transparency of the driving guide line to second transparency, where the first transparency is higher than the second transparency.

In some embodiments, the generation module 1302 is configured to: perform distance detection on movable elements around a self-vehicle according to the positioning information and the environmental perception information to obtain distance information corresponding to a plurality of movable elements;
in a case where there is a target movable element whose distance information is less than a preset distance among the plurality of movable elements, determine that the current driving scenario is an excessive proximity driving scenario;
the generating the prompt information according to the driving scenario includes:
   in a case where the current driving scenario is the excessive proximity driving scenario, generating a synchronously moving three-dimensional warning color block according to a moving position of the target movable element.

In some embodiments, the generation module 1302 is configured to: obtain a current driving speed and a speed limit of a current road section;
in a case where the current driving speed exceeds the speed limit, determine that the current driving scenario is an overspeed scenario;
accordingly, the generating the prompt information according to the driving scenario includes:
   in a case where the current driving scenario is the overspeed scenario, generating a graphic card and a flashing warning color block of the current driving speed and the speed limit.

In some embodiments, the determination module 1301 is further configured to: determine a search range according to the positioning information;
obtain operation data, and determine a plurality of points of interest within the search range according to the operation data;
determine positions of the plurality of points of interest in the three-dimensional guidance map, and display identifiers of the corresponding points of interest at the multiple positions.

The information display device provided in the embodiment of the present application can be used to execute the above-mentioned method embodiments, and implementation principle and technical effect thereof are similar and thus are not repeated here in this embodiment.

FIG. 14 is a schematic diagram of a hardware structure of an information display device provided in an embodiment of the present application. The device may be a computer, a tablet device, a vehicle computer, etc.

A device 140 may include one or more of the following components: a processing component 1401, a memory 1402, a power component 1403, a multimedia component 1404, an audio component 1405, an input/output (Input/Output, I/O) interface 1406, a sensor component 1407, and a communication component 1408.

The processing component 1401 generally controls the overall operation of the device 140, such as operations associated with display, phone calls, data communications, camera operations, and recording operations. The processing component 1401 may include one or more processors 1409 to execute instructions to complete all or part of the steps of the above method. In addition, the processing component 1401 may include one or more modules to facilitate the interaction between the processing component 1401 and other components. For example, the processing component 1401 may include a multimedia module to facilitate interaction between the multimedia component 1404 and the processing component 1401.

The memory 1402 is configured to store various types of data to support operations at the device 140. Examples of such data include instructions for any application or method operating on device 140, contact data, phonebook data, messages, pictures, videos, and the like. The memory 1402 may be implemented by any type of volatile or non-volatile storage device or a combination thereof, such as a static random access memory (Static Random Access Memory, SRAM), an electrically erasable programmable read-only memory (Electrically Erasable Programmable read-only memory, EEPROM), an erasable programmable read-only memory (Erasable Programmable Read Only Memory, EPROM), a programmable read-only memory (Programmable Read-Only Memory, PROM), a read-only memory (Read-Only Memory, ROM), a magnetic memory, a flash memory, a magnetic disk or an optical disk.

The power component 1403 provides power to various components of the device 140. The power component 1403 may include a power management system, one or more power supplies, and other components associated with generating, managing, and distributing power to the device 140.

The multimedia component 1404 includes a screen that provides an output interface between the device 140 and the user. In some embodiments, the screen may include a liquid crystal display (Liquid Crystal Displa, LCD) and a touch panel (Touch Panel, TP). If the screen includes a touch panel, the screen may be implemented as a touch screen to receive an input signal from the user. The touch panel includes one or more touch sensors to sense touches, slides, and gestures on the touch panel. The touch sensor may not only sense a boundary of a touch or a sliding action, but may also detect a duration and pressure associated with the touch or the sliding operation. In some embodiments, the multimedia component 1404 includes a front-facing camera and/or a rear-facing camera. When the device 140 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 1405 is configured to output and/or input audio signals. For example, the audio component 1405 includes a microphone (Microphone, MIC), and when the device 140 is in an operating mode, such as a call mode, a recording mode, and a speech recognition mode, the microphone is configured to receive an external audio signal, and the received audio signal can be further stored in the memory 1402 or sent via the communication component 1408. In some embodiments, the audio component 1405 further includes a speaker for outputting audio signals.

The I/O interface 1406 provides an interface between the processing component 1401 and a peripheral interface module, and the peripheral interface module may be a keyboard, a click, a button, and the like. These buttons may include, but are not limited to: a home button, a volume button, a start button, and a lock button.

The sensor component 1407 includes one or more sensors for providing status assessment of the device 140 in multiple aspects. For example, the sensor component 1407 can detect the open/closed state of device 140, and the relative positioning of components, such as the components being the display and keypad of device 140. The sensor component 1407 can also detect position changes of the device 140 or a component of the device 140, the presence or absence of user contact with the device 140, the orientation or acceleration/deceleration of the device 140 and temperature changes of the device 140. The sensor component 1407 may include a proximity sensor configured to detect the presence of a nearby object without any physical contact. The sensor component 1407 may also include a light sensor, such as a CMOS or an image sensor (Charged Coupled Device, CCD), for use in imaging applications. In some embodiments, the sensor component 1407 may also include an acceleration sensor, a gyroscope sensor, a magnetic sensor, a pressure sensor, or a temperature sensor.

The communication component 1408 is configured to facilitate communication between the device 140 and other devices in a wired or wireless manner. The device 140 may access a wireless network according to a communication standard, such as Wireless Fidelity (Wireless Fidelity, WiFi), second generation mobile communication technology (Second Generation, 2G) or third generation mobile communication technology (3rd-Generation, 3G), or a combination thereof. In an exemplary embodiment, the communication component 1408 receives a broadcast signal or broadcast-related information from an external broadcast management system via a broadcast channel. In an exemplary embodiment, the communication component 1408 further includes a Near Field Communication (Near Field Communicatio, NFC) module to facilitate short-range communications. For example, the NFC module can be implemented according to Radio Frequency Identification (Radio Frequency Identification, RFID) technology, Infrared Data Association (Infrared Data Association, IrDA) technology, Ultra Wide Band (Ultra Wide Band, UWB) technology, Bluetooth (Bluetooth, BT) technology and other technologies.

In an exemplary embodiment, the device 140 may be implemented by one or more Application Specific Integrated Circuit (Application Specific Integrated Circuit, ASIC), Digital Signal Processing (Digital Signal Processing, DSP), Digital Signal Processing Device (Digital Signal Processing Device, DSPD), Programmable Logic Device (Programmable Logic Device, PLD), Field Programmable Gate Array (Field Programmable Gate Array, FPGA), controller, microcontroller, microprocessor or other electronic components to perform the above method.

In an exemplary embodiment, a non-transitory computer-readable storage medium including instructions is also provided, such as a memory 1402 including instructions, and the above instructions can be executed by the processor 1409 of the device 140 to perform the above method. For example, the non-transitory computer-readable storage medium may be a ROM, a Random Access Memory (Random Access Memory, RAM), a Read-Only Memory (Compact Disc Read-Only Memory, CD-ROM), a magnetic tape, a floppy disk, an optical data storage device, and the like.

The above-mentioned computer-readable storage medium, the above-mentioned readable storage medium can be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic storage, flash memory, magnetic disk or optical disk. The readable storage medium can be any available media that can be accessed by a general-purpose or special-purpose computer.

An exemplary readable storage medium is coupled to the processor such that the processor can read information from, and write information to, the readable storage medium. Of course, the readable storage medium may also be an integral part of the processor. The processor and the readable storage medium may be located in an Application Specific Integrated Circuit (Application Specific Integrated Circuit, ASIC). Of course, the processor and the readable storage medium may also exist in the device as discrete components.

All or part of the steps of the above method embodiments may be completed by hardware associated with program instructions. The aforementioned program may be stored in a computer-readable storage medium. When the program is executed, the steps of the above method embodiments are executed; and the above storage medium includes: ROM, RAM, magnetic disk or optical disk and other media that can store program codes.

An embodiment of the present application further provides a computer program product, including a computer program, and when the computer program is executed by a processor, the information display method executed by the above information display device is implemented.

## Claims

1. An information display method, comprising:
acquiring positioning information and environmental perception information in response to a navigation request, and determining a three-dimensional scene graph according to the positioning information and the environmental perception information;
determining a current driving scenario, and generating prompt information according to the driving scenario;
generating a three-dimensional guidance map according to the prompt information and the three-dimensional scene graph, and displaying the three-dimensional guidance map.

2. The method according to claim 1, wherein the determining the three-dimensional scene graph according to the positioning information and the environment perception information comprises:
inputting the environmental perception information into a deep learning model to obtain an initial model of a plurality of elements corresponding to the environmental perception information;
determining corresponding target vector data from a high-precision vector database according to the positioning information and the initial model, wherein the high-precision vector database comprises vector data corresponding to different positioning information collected in advance;
generating a triangular mesh of the initial model according to the vector data, and procedurally generating a three-dimensional scene graph corresponding to the environmental perception information according to the triangular mesh.

3. The method according to claim 2, wherein the procedurally generating the three-dimensional scene graph corresponding to the environmental perception information according to the triangular mesh comprises:
procedurally generating an initial scene graph corresponding to the environmental perception information according to the triangular mesh;
in a case where there is a target element with a high-precision model among the plurality of elements corresponding to the environmental perception information, replacing a model of the target element in the initial scene graph with the corresponding high-precision model, so as to obtain the three-dimensional scene graph corresponding to the environmental perception information.

4. The method according to claim 1, wherein the generating the prompt information according to the driving scenario comprises:
in a case where the current driving scenario is a turning at road junction scenario or a lane changing scenario, obtaining a turning direction, and generating a direction change guide line of a preset length that fits a ground according to the turning direction; the direction change guide line comprises multiple continuous arrows with gradually changing directions.

5. The method according to claim 1, wherein the generating the prompt information according to the driving scenario comprises:
in a case where the current driving scenario is a traffic light scenario and a vehicle drives to a point where a distance to a traffic light is less than or equal to a preset distance, generating a three-dimensional model of the traffic light; in a case where the current driving scenario is that a red light is on, obtaining and displaying countdown timing information, and setting transparency of a driving guide line to first transparency; in a case where an end of a countdown is detected, setting the transparency of the driving guide line to second transparency, wherein the first transparency is higher than the second transparency.

6. The method according to claim 1, wherein the determining the current driving scenario comprises:
performing distance detection on movable elements around a self-vehicle according to the positioning information and the environmental perception information to obtain distance information corresponding to a plurality of movable elements;
in a case where there is a target movable element whose distance information is less than a preset distance among the plurality of movable elements, determining that the current driving scenario is an excessive proximity driving scenario.

7. The method according to claim 6, wherein the generating the prompt information according to the driving scenario comprises:
in a case where the current driving scenario is the excessive proximity driving scenario, generating a synchronously moving three-dimensional warning color block according to a moving position of the target movable element.

8. The method according to claim 1, wherein the determining the current driving scenario comprises:
obtaining a current driving speed and a speed limit of a current road section;
in a case where the current driving speed exceeds the speed limit, determining that the current driving scenario is an overspeed scenario.

9. The method according to claim 8, wherein the generating the prompt information according to the driving scenario comprises:
in a case where the current driving scenario is the overspeed scenario, generating a graphic card and a flashing warning color block of the current driving speed and the speed limit.

10. The method according to claim 1, wherein after the displaying the three-dimensional guidance map, the method further comprises:
determining a search range according to the positioning information;
obtaining operation data, and determining a plurality of points of interest within the search range according to the operation data;
determining positions of the plurality of points of interest in the three-dimensional guidance map, and displaying identifiers of the corresponding points of interest at the multiple positions.

11. An information display device, comprising:
a determination module, which is configured to obtain positioning information and environmental perception information in response to a navigation request, and determine a three-dimensional scene graph according to the positioning information and the environmental perception information;
a generation module, which is configured to determine a current driving scenario and generate prompt information according to the driving scenario;
a display module, which is configured to generate a three-dimensional guidance map according to the prompt information and the three-dimensional scene graph, and display the three-dimensional guidance map.

12. An information display device, comprising: at least one processor and a memory;
wherein the memory stores computer-executable instructions;
the at least one processor executes the computer-executable instructions stored in the memory, so that the at least one processor performs the information display method according to any one of claims 1 to 10.

13. A vehicle, comprising: the information display device according to claim 12.

14. A computer-readable storage medium, wherein the computer-readable storage medium stores computer-executable instructions, and when a processor executes the computer-executable instructions, the information display method according to any one of claims 1 to 10 is implemented.

15. A computer program product, comprising a computer program, wherein when the computer program is executed by a processor, the information display method according to any one of claims 1 to 10 is implemented.
